(19) Europäisches Patentamt
European Patent Office
Office européen des brevets

(11) **EP 2 292 067 B1**

(12) **EUROPEAN PATENT SPECIFICATION**

(45) Date of publication and mention
of the grant of the patent:
**08.06.2016 Bulletin 2016/23**

(51) Int Cl.:
*H04W 74/08* *(2009.01)*   *H04J 13/00* *(2011.01)*
*H04L 27/26* *(2006.01)*

(21) Application number: **08760966.5**

(22) Date of filing: **12.06.2008**

(86) International application number:
**PCT/EP2008/057431**

(87) International publication number:
**WO 2009/149760 (17.12.2009 Gazette 2009/51)**

(54) **RANDOM ACCESS MODE CONTROL METHOD AND ENTITY**

DIREKTZUGRIFFSMODUS-STEUERVERFAHREN UND ENTITÄT

PROCÉDÉ DE COMMANDE DE MODE D'ACCÈS ALÉATOIRE ET ENTITÉ

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**09.03.2011 Bulletin 2011/10**

(73) Proprietor: **Telefonaktiebolaget LM Ericsson (publ)**
**164 83 Stockholm (SE)**

(72) Inventor: **BALDEMAIR, Robert**
**S-171 70 Solna (SE)**

(74) Representative: **Hoffmann Eitle**
**Patent- und Rechtsanwälte PartmbB**
**Arabellastraße 30**
**81925 München (DE)**

(56) References cited:
**WO-A-2008/051033**

• **"Using Restricted Preamble Set for RACH in High Mobility Environments" 3GPP DRAFT; R1-073168, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_ran\WG1_RL1\TSGR1_49b\Docs, no. Orlando, USA; 20070625, 25 June 2007 (2007-06-25), XP050106807**
• **PANASONIC ET AL: "Non-synchronized RACH preamble structure for high mobility UE" 3GPP DRAFT; R1-070188, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_ran\WG1_RL1\TSGR1_47bis\Docs, no. Sorrento, Italy; 20070115, 10 January 2007 (2007-01-10), XP050104230**

**Description**

**Technical Field**

The present invention relates to communications in a wireless network system and more particularly to a method of controlling a random access mode in a cell of a cellular communication system, to a network entity for communicating with user equipments in a cell of a cellular communication system and to a corresponding computer program product.

**Background**

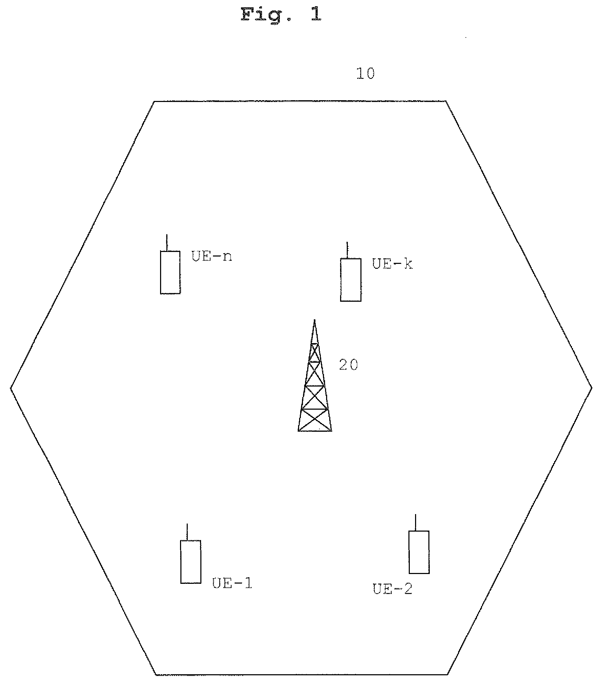

In modern cellular radio systems, a schematic example of which is shown in Figure 1, a radio network may have strict control over the behaviour of user equipments or mobile stations UE-1 ... UE-n. Uplink transmission parameters like frequency, timing, and power may be regulated via downlink control signalling from a network entity 20 (e.g. a base station) to any of the user equipments UE-1 ... UE-n.

At power on or after a long standby time, a user equipment UE in the cell 10 may not be synchronized in the uplink. In this situation, the user equipment can derive from a downlink control signal information related to an uplink frequency and to a power estimate. However, it is difficult for the user equipment to make a timing estimate since the round trip propagation delay between the network entity 20 and the user equipment is unknown. Further, even if the user equipment uplink timing is synchronized to the downlink, a message from the user equipment may arrive too late at the receiver of the network entity 20 because of the propagation delays.

Therefore, before commencing traffic, the user equipment may carry out a so-called random access (RA) procedure to the network. Accordingly, a user equipment UE-i transmits a random access message, based on which the network entity 20 can estimate the timing misalignment of the user equipment uplink and send a corresponding correction message. During the random access procedure, uplink parameters like timing and power are not very accurate. This poses challenges to the dimensioning of a random access procedure.

For example, a physical random access channel (PRACH) may be provided for the user equipment to request access to the network. An access burst is used which contains an identification of the user equipment. The PRACH can be orthogonal to the traffic channels. For example, in GSM a special PRACH slot is defined.

A user equipment may select a sequence of symbols as a random access identification to be included in a random access message for performing the random access procedure, e.g. from a defined set of such sequences associated with a given cell. The network entity 20 will receive the random access message and reply to the user equipment using the received identification sequence.

One situation that may occur in a cell of a wireless communication network consists in multiple user equipments requesting random access at the same time. If the user equipments are accidentally using the same identification sequence and their respective random access messages are simultaneously received, the network entity 20 will not be able to distinguish between the two user equipments and a collision will be detected.

Therefore, the random access procedure in cellular wireless network poses several technical problems related to a correct identification of user equipment under varying conditions. For example, it is known that some mobile stations may encounter frequency offset, e.g. a Doppler offset due to relative motion between the mobile station and the base station. Such frequency offset can lead to misidentifications at a detector for the identification sequences, i.e. a received sequence is held to be a different sequence than the one sent by the sender, due to the effects of frequency offset. A countermeasure against this problem is the introduction of different sets of random access sequences to be used by mobile stations for identification during random access. In other words, a special set of such random access identification sequences may be defined for a cell that are specifically chosen such that misidentifications become less probable than for a normal set. Such a scheme is e.g. known from 3GPP TS 36.211 in which so-called random access preambles (which are an example of random access identification sequences) are either chosen from a so-called unrestricted set or a so-called restricted set, where the restricted set is designed to avoid misidentifications. WO2008051033 discloses a method for establishing RACH transmission to prepare against the frequency offset, wherein the method reduces the length of the RACH preamble even if the frequency offset exists, allowing the RACH preamble to include a repeated structure (also called an iterative structure) or to use a specific sequence with less effect on the frequency offset, so that the Node-B can easily detect the RACH preamble. Also, the method determines whether the user equipment (UE) can estimate its speed according to the aforementioned RACH setup condition, and prescribes a detailed RACH access method according to the determined result.

**Summary of the Invention**

An object of the invention is to provide improvements in random access control of cellular communication networks with respect to dealing with sequence alterations that occur during transmission, such as frequency offsets.

According to an aspect of the present invention, a method is provided for controlling a random access mode in a cell of a cellular communication system. The method may be executed in a network entity. The network entity may be a network node. In a Long Term Evolution network, the network entity may comprise e.g. an eNodeB. A skilled person recognises that however any network node may be adapted to perform the method. Further, the method could be executed by several network nodes wherein the necessary functions are suitably distributed. The cell can be operated according to a first random access mode associated with a first set of random access identification sequences or in a second random access mode associated with a second set of random access identification sequences. The random access identification sequences are to be used by terminals for performing a random access operation in the cell. The characteristic of the second set of random access identification sequences is such that these sequences are arranged for avoiding misidentifications due to sequence alterations such as frequency offsets occurring in transmissions from said terminals. For example, the first set can be an unrestricted set and the second a restricted set of preambles as defined by 3GPP TS 36.211. The present method performs a sequence alteration analysis based on an output of a random access identification sequence detector in a network entity. If a mode switching condition is determined on the basis of the sequence alteration analysis, then the method automatically switches operation of the cell from one of said random access modes to the other of said random access modes.

In other words, it is proposed to monitor the output of a random access identification sequence detector, and if a condition is found that indicates presence or absence of sequence alteration, appropriately changing the random access mode automatically. It is a recognition of the inventor that one may detect the presence of sequence alteration in random access sequences from the output of a sequence detector, and to then use such recognition for purposes of automatic mode adaptation. According to one example, if a cell is in a normal mode using a first set of random access identification sequences (e.g. an unrestricted set) that are not designed to avoid misidentification due to sequence alteration, then a measurement of an indication of the presence of sequence alteration in the output of the random access identification sequence detector can trigger the automatic switching to a second mode that uses a second set of random access identification sequences (e.g. a restricted set) that are specifically designed to avoid misidentification due to sequence alteration. According to another example, which can be advantageously combined with the first example, if a cell is in the second mode using the second set of random access identification sequences, then a measurement of an indication of the absence of sequence alteration in the output of the random access identification sequence detector can trigger the automatic switching to the first mode.

The proposed concept provides great flexibility and makes management of random access modes in a cell simpler, as the cell can automatically adapt to changing situations. This is advantageous, as the second set of random access identification sequences generally has the disadvantage of being smaller and less widely applicable than the first set that it not designed to counteract the effects of sequence alteration. Thus, the second set should only be used if and as long as sequence alteration is a significant problem. The automatic switching function of the invention provides an adaptability that can be used in many ways. For example, if a cell covers an area that comprises a road over which many users travel fast, sequence alteration during random access can become a serious problem. However, it is possible that the problem is not permanent, e.g. because traffic conditions change over time. The present concept can flexibly take such changing conditions into account and automatically choose the best set of random access identification sequences for each situation, i.e. only chooses the second mode when the degree of occurrence of sequence alterations actually demands it, and can optionally also switch back to an otherwise more desirable normal set when the conditions change and sequence alteration no longer occurs to a significant degree. This is a significant advantage over the prior art, in which choosing one or the other set of random access identification sequences must be done during cell planning and is fixed, i.e. inflexible.

It is noted that the proposed method can be performed in any suitable entity of the network. An entity can be a single unit, such as a base station or a base station controller, or a plurality of units and devices that provide the described functionality in a distributed manner. The entity may be any network node or group of network nodes adapted to perform the required functions.

According to another aspect, the present invention is also directed to a network entity for communicating with terminals in a cell of a cellular communication system. The cell is adapted for operating in a first random access mode associated with a first set of random access identification sequences or in a second random access mode associated with a second set of random access identification sequences. The random access identification sequences are used by terminals performing a random access operation in said cell. The second set of random access identification sequences is arranged for avoiding misidentifications due to sequence alterations such as frequency offsets occurring in transmissions from said terminals. Misidentifications are not limited to frequency offset conditions, but also other conditions may result in an alteration of the random access identification sequences and thus in a misdetection. The network entity of the invention comprises a random access identification sequence detector, an analyser for performing a sequence alteration analysis based on an output of the random access identification sequence detector, and a mode switch adapted to automatically switch operation of said cell from one of said random access modes to the other of said random access modes if a mode switching condition is determined on the basis of the sequence alteration analysis.

The sequence alteration analysis can be performed in any suitable or desirable way, e.g. at regular intervals, only after a predetermined number of sequences have been received, continuously and/or in any other variation that a skilled person would deem suitable.

The terminals can comprise any type of apparatus capable of performing wireless communication with the network entity, such as a mobile telephone, a PDA or any device having an interface capable of wireless communication according to common standards as WLAN, GSM, UMTS or Long Term Evolution networks. The terminal may also be referred to as mobile station or user equipment.

The network entity can be a network node, a base station in a GSM network, an eNodeB in Long Term Evolution (LTE) networks, a corresponding node in a UMTS network or an access point like in WLAN networks. The network entity can also be a network node or network device separated from the above nodes or devices and adapted to perform the needed functions or a system of several devices or network nodes in which the desired functions are suitably distributed.In the present application, network nodes are considered as a particular example of a network device.

In examples of the invention, the sequence alteration analysis may comprise counting a number of occurrences of sequence alteration events in the output of the random access identification sequence detector. Such a count value may serve as a basis for assessing the degree of occurrence of sequence alteration. The sequence alteration analysis may additionally or alternatively comprise reporting a presence of random access identification sequences affected by sequence alteration in said cell. The presence may, for instance, be reported when at least one terminal or when a given threshold number of terminals are noticed as being affected by sequence alteration. The reporting could also be based on normalized parameters, for instance on a given number of affected terminals over a given time period (i.e. number divided by defined unit of time, which is a frequency) or on the normalized number of affected received sequences (i.e. as a percentage based on the number of affected sequences during a given period of time divided by the total number of received sequences during that given period of time).

The mode switching condition of the method can comprise a first mode switching condition that is determined on the basis of the reported presence, e.g. the presence of sequences affected by sequence alteration causes the determination that a first switching condition is met. When said first switching condition is determined, the automatic switching operation may comprise automatically switching operation from the first random access mode to the second random access mode upon determination of said first mode switching condition.

The method may report the presence of terminals affected by sequence alterations in any suitable or desirable way, e.g. if a measured frequency of sequence alteration events exceeds a predetermined first threshold. The term "measured frequency" refers to the number of sequence alteration events per a given period of time, as explained above. Additionally or alternatively, the presence of affected terminals can also be reported if the above described normalized number of affected received sequences exceeds a predetermined first percentage.

A sequence alteration analysis according to an embodiment of the invention may also comprise reporting absence of random access identification sequences affected by sequence alteration in said cell. The reporting of absence conditions can be performed similar to what was described with reference to the reporting of presence of offset conditions. Under such circumstances, i.e. upon reporting absence of sequence alteration conditions, a second mode switching condition is determined. Upon determination of said second mode switching condition, the automatic switching operation may comprise automatically switching operation from the second random access mode to the first random access mode.

Reporting the absence of sequence alteration can be done in any suitable or desirable way, e.g. if a measured frequency of sequence alteration events falls below a predetermined second threshold, and/or if a normalized number of affected received sequences falls below a predetermined second percentage.

The first and the second threshold and the first and the second percentage can have identical values, or alternatively distinct values. For example, the first threshold (first percentage) may be larger than the second threshold (second percentage), in order to provide hysteresis and thereby avoid hunting when switching from one random access mode to another.

The random access identification sequence detector may operate in any suitable or desirable way, e.g. it may compare received random access identification sequences with predetermined random access identification sequences for outputting a detection result.

In a preferred embodiment, the random access identification sequence detector comprises a correlator for correlating received random access identification sequences with predetermined random access identification sequences, i.e. for performing a mathematical correlation operation and outputting a result that indicates the degree of correlation between a received sequence and predetermined sequences.

The sequence alteration analysis may comprise analysing whether a pattern characteristic of sequence alteration is present in the detection result.

When using a correlator, the characteristic pattern may comprise correlation peaks indicating presence of sequence alteration.

The concept of the invention is generally applicable in the context of any cellular communication network that uses at least two random access modes for dealing with sequence alteration problems. Nonetheless, applying the concept to systems operating according to the third generation partnership project (3GPP) is a preferred application. In an embodiment of the invention, the random access identification sequences may therefore be comprised in a preamble of a random access message according to a standard related to Long Evolution Networks, for instance as disclosed in the standard 3GPP TS 36.211.

The random access identification sequences can be of any suitable or desirable kind. For example, they may comprise constant amplitude zero auto correlation sequences. Constant amplitude zero auto correlation sequences are characterized by having constant amplitude and by the fact that their periodic auto correlation is ideal, i.e. it is only non-zero at time-lag zero. The periodic cross correlation possesses a constant magnitude independent of any time shift.

A general advantage of the present invention lies in the fact that a more flexible management of the sequence sets can be achieved. Embodiments of the invention may further overcome several other disadvantages, like for instance a rigid and fixed configuration of the operation of the cell. The cell configuration and operation can be regularly or continuously, i.e. in real time, monitored thus achieving a better utilisation of the cell resources and cell size.

**Brief Description of the Drawings**

The present invention will now be described with reference to specific examples and embodiments, which are given only for illustrative purposes but do not restrict the scope of the invention, and which sometimes refer to drawing that show:

Fig. 1     is a schematic representation of a typical cell in a wireless communications network;

Fig. 2     shows a flow chart of a method embodiment of the present invention;

Fig. 3     is a schematic block diagram of a network entity according to an example of the present invention;

Fig. 4     shows examples of output signals from a correlator;

Fig. 5     is a graph showing the relationship between preamble sets and cell radius for two different preamble set types;

Fig. 6     reports graphs of further output signals of a random access receiver under different sequence alteration conditions;

Fig. 7     is a schematic block diagram of an example of a frequency domain random access receiver;

Fig. 8     is a flow chart showing the automated activation of a restricted set of sequences according to an embodiment of the present invention;

Fig. 9     is a flow chart representing automated deactivation of a restricted set of sequences according to an embodiment of the present invention;

**Detailed Description**

Examples of the present invention will now be described in order to provide a better understanding of the inventive concepts. These examples are all only illustrative but not restrictive. For example, reference will be made to the concepts of preambles and restricted sets as described e.g. in standard 3GPP TS 36.211, to which the inventive concepts can be advantageously applied, but the invention is by no means restricted thereto, as it can be applied in the context of any communication system in which different sets of random access identification sequences are used to counteract effects of sequence alteration. Furthermore, the following examples will typically refer to frequency offset (e.g. due to Doppler shifts) as the cause of the sequence alteration, but the concepts of the invention can be applied to situations in which sequence alterations during transmission are caused by other effects.

In a cell 10 of a typical wireless communications network as the one depicted in Figure 1, user equipment UEi may perform a random access procedure after power on or after a long standby time. When performing the random access procedure, the user equipment UEi assembles a random access message comprising a random access identification sequence, hereinafter abbreviated to RAID sequence, which is typically chosen from a pool of RAID sequences available to user equipments in cell 20. Said a random access message is typically sent to a network entity 20. The network entity 20 (e.g. a base station) can receive simultaneously random access messages originating from different user equipments, for instance UE-1 and UE-2 in Figure 1.

If two different user equipments accidentally use the same RAID sequence, they cannot be distinguished by the network entity 20 when the corresponding random access messages are received simultaneously or in a very short time sequence. This situation results in a misidentification since the network entity 20 cannot correctly reply to the random access message.

However, misidentification may occur also in those situations wherein two user equipments are using different RAID sequences. In fact, an alteration of one of the RAID sequences may occur during transmission such that at the receiver it appears like an RAID sequence sent by another user equipment. Such alteration may be the result of errors introduced in the transmission channel which modify the RAID sequence such that it accidentally coincides with the RAID sequence sent by a different user equipment. Other causes of this alteration may be found also in time shifts or frequency offsets resulting from particular situations. Frequency offsets in turn may result from a wrong calibration or low accuracy of the random access message transmitter or from the relative movement of the transmitter with respect to the receiver, since the speed of the movement creates a frequency offset due to the Doppler effect.

In order to mitigate the disadvantages of misidentification of user equipments, it is conceivable to have a first set of RAID sequences under which the cell is normally operated, and at least a second set of RAID sequences which have the property of avoiding or reducing the probability of misidentification of user equipments. The second set of RAID sequences, which may also be referred to as the restricted set, comprises RAID sequences that do not result in other RAID sequences of the same set when they undergo alteration for the above-mentioned reasons, or at least do so to a lesser degree than a normal or unrestricted set.

Implementation of more than two sets is also an option, wherein a third or further restricted set would comprise some RAID sequences that may overlap with existing RAID sequences only upon occurrence of particular or statistically unlikely alteration conditions. Definition of a plurality of sets can also be an advantageous option reflecting the level of probability of misidentifications that can be tolerated by the set.

A disadvantage of the restricted set is that, in order to fulfil the above property, it may comprise a number of RAID sequences that is more limited than the first or normal set. As a result, the number of terminals that can be served in the cell is restricted or limited compared to the number of terminals that can be served in a cell operated with the first or normal set. Thus, the restricted set, by making available only limited number of RAID sequences in the cell, may result in a reduction of the cell size.

In view of the above, cells not affected by the above-mentioned alteration problems can be operated with a first or normal set of RAID sequences without reducing the cell size. Instead, cells affected by alteration problems like frequency offset should be preferably operated with the restricted set, bearing the drawback of having limited capabilities such as a reduced cell size.

A disadvantage linked to such implementation lies in a low flexibility of operation of the cells and in a more difficult reconfiguration of the cell when an operator or network manager may need or wish to change the operation between the two sets.

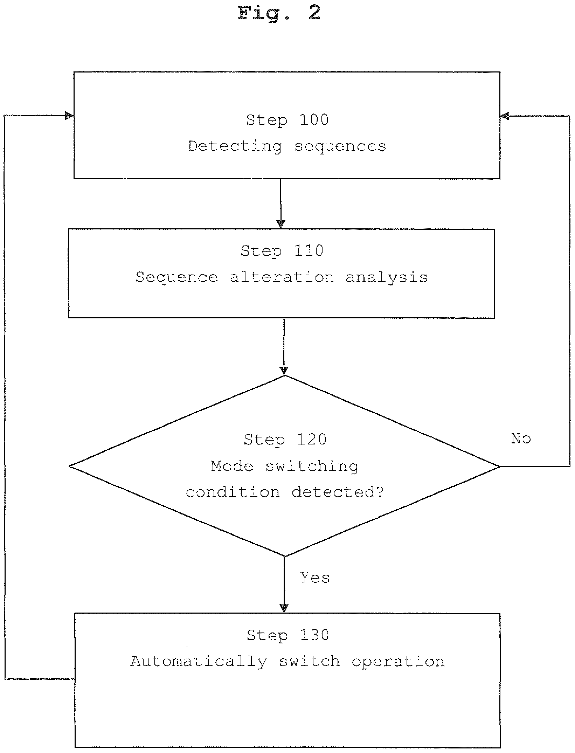

With reference to Figure 2, it will now be described a method according to an embodiment of the invention that overcomes at least some of the disadvantages of the prior art by performing a dynamic management of the set of RAID sequences. A set of RAID sequences may be a defined set of sequences associated with a given cell from which user equipments can choose RAID sequences when performing random access. A cell may be operated according to several sets of RAID sequences, like a first or unrestricted set and a second or restricted set. The restricted set may be designed to avoid misidentification.

The method will now be described with reference to a cell in a cellular communication system, like the cell 10 in Figure 1, which is initially operating either with the unrestricted or with the restricted set.

User equipments UEi perform random access operation in said cell by including, for instance, RAID sequences in random access message. At the receiving side, a detector performs detection of said RAID sequences (step 100). The detector can be comprised in a network entity like, for instance, a network node or device 20 as in Fig. 1. Examples of said network node or device can comprise a base station in a GSM network or an eNodeB in an LTE (Long Term Evolution) network. It should however be noted that said detection can also be performed in another network entity like a controlling node which is connected to the base station or to the eNodeB mentioned above. Furthermore, the detection can be performed also in a system several devices in which the necessary functions have been suitably distributed. A skilled person would readily recognise that the detection can be performed in any device or combination thereof as long as they implement the needed functions for performing the detection.

On the basis of the output of the detector, the method performs a sequence alteration analysis, such as e.g. a frequency offset analysis (step 110). The analysis comprises operations for determining whether a received RAID sequence is affected by an alteration problem like frequency offset. Said operation may comprise comparing the received RAID sequences with predetermined RAID sequences, e.g. with RAID sequences previously stored, and if no match if found between the received and the stored RAID sequences it may be concluded, for example, that the received random access message is affected by frequency offset. Thus, on the basis of the above mentioned operations, the frequency offset analysis may report presence or absence of random access messages having RAID sequences affected by frequency offset. This reporting may include reporting the number of RAID sequences affected by frequency offset.

Alternatively, the reporting may include reporting the number of RAID sequences affected by frequency offset normalized to the number of received RAID sequences. As a further alternative, the reporting may be based on the number of RAID sequences affected by frequency offset detected in a given time period. A skilled person would recognise that also a generic function or a combination of the above examples would be a possible implementation of reporting the presence or absence of alteration conditions like offset conditions.

In step 120 it is checked whether a mode switching condition is determined on the basis of the frequency offset analysis. A first mode switching condition is for instance detected when the cell is operating under the first set of RAID sequences and the frequency offset analysis reports, in one of the ways presented above, the presence of RAID sequences affected by frequency offset. As an example, the first mode switching condition is determined when the reported presence of RAID sequences affected by frequency offset exceeds a first predetermined threshold. The reported presence can comprise the absolute number of reported RAID sequences affected by frequency offset or the corresponding rate. A second mode switching condition may be detected in a cell operating with the restricted set of RAID sequences, when the frequency offset analysis reports, in one of the ways indicated above, the absence of RAID sequences affected by frequency offset. For instance, the second mode switching condition may de determined when the reported RAID sequences affected by frequency offset falls below a second given threshold or when the corresponding rate falls below a predetermined threshold. The rates mentioned above can be referred to a particular time period, to the number of received RAID sequences or to a combination of them. Other implementations of said rate are possible, as a skilled person would deem suitable.

If a mode switching condition is determined, then the operation of said cell is switched to the other set of RAID sequences (step 130). That is to say, if the cell was operating in the first normal set of RAID sequences, like the unrestricted set, the operation of the cell will be switched to the restricted set of RAID sequences upon detection of the mode switching condition. If, to the contrary, the cell is operating under the restricted set of RAID sequences, the operation of the cell will be switched to the first normal set, e.g. the unrestricted set, of RAID sequences upon detection of the mode switching condition.

The switch of cell operation from one set to another set of RAID sequences can be performed, in one embodiment, by the above described network entity communicating information to user equipments present in the cell, said information specifying which set of RAID sequences to use from a specified moment on when performing random access. For instance, said information may be broadcast within the cell using a channel like a signalling channel. Other channels, physical or logical, may however be used as long as they carry said information.

If no mode switching condition is detected, then the procedure may loop back to step 100. Equally, after step 130, the procedure may loop back to step 100 and continue.

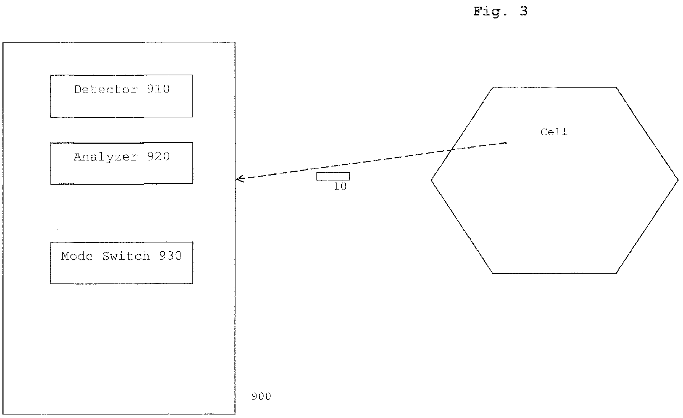

In the above example, the operation mode was switched for using two different sets of RAID sequences. Naturally, more than two sets can be used, and the procedure of step 120 can be appropriately adapted to select an appropriate one of the modes in dependence on the result of the analysis in step 110. Figure 3 is a schematic representation of a network entity representing an embodiment carrying out the present invention. The entity can in principle be an individual device or unit, or it can be a system of elements spread out over several devices or units in a distributed way. In the example of Figure 3, the entity is shown as a device 900. The network device 900 typically comprises a detector 910 for detecting the received sequences comprised in random access messages. The detector 910 is configured to perform, for instance, a correlation of the received sequences or a comparison of the received RAID sequences with predetermined RAID sequences. The detector could also be a comparator that compares received sequences with predetermined ones.

The analyzer 920 is configured to perform a sequence alteration analysis, such as a frequency offset analysis on the detected sequences. The analyzer may for instance evaluate the output of the correlator and determine if multiple peaks are present and the distance between said peaks. In general, the analyzer may determine whether RAID sequences comprise signs or patterns indicative of alterations to desired RAID sequences due to effects occurring on the transmission channel or in the sender, such as frequency offset or miscalibration.

The mode switch 930 is configured to switch the operation of the cell from one mode to another, for instance from a first unrestricted set of sequences to a second restricted set of sequences or vice versa. As above described, this can be achieved for instance by broadcasting the needed information to the user equipments in the cell.

The above components 910, 920 and 930 can indifferently be implemented in one single component or in separate components. The implementation can indifferently be by software, hardware or a combination of both. The components or parts thereof need not be necessarily comprised in the same device but may be distributed among different network devices according to circumstances, as also explained above.

As already introduced above with reference for instance to LTE networks, the number of sets with 64 preambles is much smaller in the restricted set of cyclic shifts than in the normal set making cell planning more complicated. It is therefore desirable to operate as many as possible cells with the normal set and use the restricted set of cyclic shifts only in those cells that really serve terminals with high frequency offsets. This present invention proposes a method for automatically detecting RA transmissions with considerably sequence alterations, such as high frequency offsets and enabling the restricted set of cyclic shifts only if necessary.

Reference will now be made to a detailed example that relates to Long Term Evolution (LTE) networks, which fall among the networks to which the present invention can advantageously be applied. The network entity 20 of Figure 1 may in this case represent an eNodeB and the UE-1 ... UE-n may represent user equipments in a cell of an LTE network. As it will be clear from the above and from the details in the following, the invention can however be carried out also in other networks, like UMTS, WLAN, OFDM or other wireless networks affected by the same problems and disadvantages.

Usually, a Physical Random Access Channel (PRACH) is provided for the UE to request access to the network. An access burst is used which contains a preamble with a specific sequence with good autocorrelation properties. The PRACH can be orthogonal to the traffic channel. In GSM, for example, a special PRACH slot is defined.

As already noted, since multiple user equipments UEs can request access at the same time, collisions may occur between requesting UEs. Therefore LTE defines multiple random access (RA) preambles. A UE performing random access randomly picks a preamble out of a pool and transmits it. The preamble represents a random UE ID sequence which is used by a network entity adapted for granting access to the network. The preambles in LTE networks are an example of the RAID sequence of the method of present invention. The pool from which the preamble is chosen is an example of a set of RAID sequences. The network entity can be the eNodeB when granting the UE access to the network. However, the network entity could be a different network device arranged for granting UEs with access to the network or could be represented by a plurality of network devices wherein the necessary functions are appropriately distributed.

The eNodeB receiver can resolve random access (RA) attempts performed with different preambles and send a response message to each UE using the corresponding random UE IDs. When multiple UEs simultaneously use the same preamble a collision occurs and most likely the RA attempts will not be successful since the eNodeB is not able to distinguish between the multiple UEs (and corresponding users) since they are not using different random UE IDs. In LTE 64 preambles are provided in each cell, as specified for instance by the 3GPP standard like 3GPP TR 36.211 "Physical Channels and Modulation (Release 8)". Preambles assigned to adjacent cells are typically different to insure that a random access (RA) in one cell does not trigger any random access (RA) events in a neighboring cell. The set of preambles that can be used for random access (RA) in the current cell is therefore appropriately broadcast in the cell.

One or multiple random access (RA) preambles can be derived from a single Zadoff-Chu (ZC) sequence - in the following also denoted root sequence - by cyclic shifting: Due to the ideal auto correlation function of ZC sequences multiple mutually orthogonal sequences can be derived from a single root sequence by cyclic shifting one root sequence multiple times the maximum allowed round trip time plus delay spread in the time-domain. Since each cyclic shift amount must be at least as large as the maximum round trip time in the cell plus delay spread, the number of preambles that can be derived from a single root sequence is cell size dependent and decreases with cell size. In order to support operation in cells with different sizes, LTE defines 16 cyclic shift lengths $N_{CS}$ supporting cell sizes up to approximately 100 km. The value that used in the current cell is broadcast.

The number of preambles that can be derived from a single root sequence depends on the length of the cyclic shift zone $N_{CS}$ and is floor $(N_{ZC}/N_{CS})$. Each cell has 64 preambles assigned to it, the number of required root sequences that may be allocated to a cell is then ceil $(64/ \text{floor}(N_{ZC}/N_{CS}))$.

Not only the length of the cyclic shift should be larger than the maximum round trip time plus delay spread. Also the cyclic prefix and the guard period - which account for the timing uncertainty in unsynchronized random access (RA) - should be larger than the maximum round trip time plus delay spread. LTE FDD currently defines four different random access (RA) preamble formats with three different cyclic prefix/guard period length supporting cell sizes of 15 km, 30 km, and 100 km. LTE TDD defines an additional fifth preamble for very small cells.

ZC sequences are so called Constant Amplitude Zero Auto Correlation (CAZAC) sequences: they have constant amplitude and their periodic auto correlation is ideal, i.e. it is only non-zero at time-lag zero. The periodic cross correlation possesses a constant magnitude independent of the time shifts. These properties make them very attractive for random access (RA) since the cyclic prefix ensures - as long as round trip time plus delay spread fits into it - that the correlation between received random access preamble and the preamble is cyclic.

A ZC sequence of odd length is defined as

$$x_u(n) = e^{-j\frac{\pi}{N_{ZC}}un(n+1)}, \qquad n = 0,1,\dots N_{ZC}-1,$$

where $N_{ZC}$ denotes the sequence length. If $N_{ZC}$ is a prime number, then all $N_{ZC}-1$ values for u =1, 2, ..., $N_{ZC}-1$ result in valid root sequences. In LTE $N_{ZC}$ is set to 839, for preamble formats 0 to 3, and to 139 for preamble format 4. Thus, 838 different root sequence are available in total for preamble formats 0 to 3.

From each root sequence random access (RA) preambles are derived according to

$$x_{u,v}(n) = x_u((n + vN_{CS}) \bmod N_{ZC})$$

As stated earlier, the number of preambles that can be derived from a single root sequence is limited by floor $(N_{ZC}/N_{CS})$.

One drawback of ZC sequences is their behaviour at high frequency offsets. Due to their special properties a received random access (RA) signal suffering from a frequency offset of certain size may be identical to a received random access (RA) signal with no frequency offset but an additional positive or negative cyclic delay.

In LTE the ZC sequences defining random access (RA) preambles are defined in the time-domain and subsequently transmitted with an SC-FDMA transmitter that may comprise a DFT precoder having size equal to 839, for preamble formats 0 to 3, and an OFDM transmitter having a subcarrier bandwidth of 1250Hz .

A frequency offset of exactly 1250 Hz cyclically advances/delays the received RA signal by

$$d_u = \frac{1}{u} \bmod N_{ZC}$$

time units, where the time unit is the duration between two consecutive samples of the original ZC random access (RA) preamble. The parameter u is the physical root index of the transmitted root sequence. This extra delay manifests itself in the correlator output by a cyclic shift of the correlator peak by exactly this delay. Depending on the sign of the frequency offset the correlator output signal is cyclically delayed or advanced. In case of a time-dispersive channel and/or a receiver implementation with sampling frequency unequal to that one of the transmitter, the peak is understood not as a single sample but as a multitude of signal samples assembling this peak.

A frequency offset of less than 1250 Hz creates in the correlator output two main peaks, one at the correct location and another one cyclic shifted by $d_u$ time units. In addition to these two peaks multiple other - more attenuated - peaks occur.

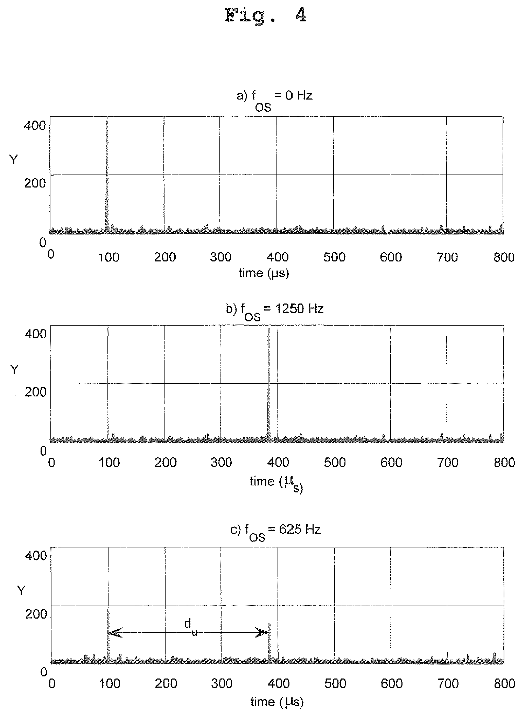

Figure 4 shows, for three different conditions, output signals of a frequency domain random access (RA) receiver. The vertical Y axis of each of figures 4(a), (b) and (c) can represent, for instance, the output of a correlator. The horizontal X axis represents, for instance, the time axis expressed in $\mu$s.

Figure 4(a) represents the correlator output signal over an AWGN (Additive White Gaussian Noise) channel and an SNR of -10 dB with no frequency offset. In this case, the received signal has no frequency offset and the peak occurs at the correct time.

Figure 4(b) represents the received signal when the signal suffers from a frequency offset of 1250 Hz. In this case, the correlation peak is delayed by $d_u$ time units. It is noted that a single peak exists which is cyclically shifted by $d_u$ time units

Figure 4(c) represents the receiver signal when the signal suffers from a frequency offset of 625 Hz. In this case, two (attenuated) peaks at both positions occur.

As long as the magnitude of the frequency offset stays within 0 and 1250 Hz the (strongest) peaks occur at $n_0$ and at $((n_0 \pm d_u) \bmod NZC)$ depending on the sign of the frequency offset. The position $n_0$ is the true peak position. The modulo operation reflects the cyclic nature of the displacement.

For frequency offsets larger than 1250 Hz the two main peaks are located at $((n_0 \pm d_{u,1}) \bmod N_{ZC})$ and at $((n_0 \pm d_{u,2}) \bmod N_{ZC})$ with

$$d_{u,1} = \frac{L-1}{u} \bmod N_{ZC}$$

$$d_{u,2} = \frac{L}{u} \bmod N_{ZC}$$

and

$$L = \left\lceil \frac{|f_{OS}|}{1250} \right\rceil.$$

The quantity $f_{OS}$ is the frequency offset in Hz. The difference $|(n_0 \pm d_{u,2}) - (n_0 \pm d_{u,1})|$ (assuming the same sign in both expressions) reduces to $d_u$ so that, even for frequency offsets larger than 1250 Hz, the two main peaks are separated by $d_u$. This peak separation is to be understood in a cyclic way, i.e. a trailing peak may wrap around at the end and thus be perceived as a leading peak (with a different separation than $d_u$ however since $d_u$ is measured in this case over the wrap around).

A frequency offset of 625 Hz or even 1250 Hz is quite possible: A terminal moving directly towards or away from the base station and with line-of-sight contact to the base station suffers from a frequency offset twice as large as the Doppler shift. For a carrier frequency of 2.5 GHz and terminal speeds of 120 km/h and 350 km/h the frequency offset becomes 602 Hz and 1620 Hz, respectively. Terminals not moving radially to or from the base station experience a smaller frequency offset.

Depending on the size of $d_u$, on the cyclic shift length $N_{cs}$, and/or on the true delay $n_0$, the cyclically shifted peak, from now on also denoted as secondary peak, creates different kinds of errors in the receiver as explained in the following. If the secondary peak still occurs in the own cyclic shift zone, the preamble transmission will be detected but a false timing advance will be calculated leading to a wrong timing alignment of subsequent transmission from this terminal. If the secondary peak occurs outside the own cyclic shift zone, the RA receiver will detect a wrong preamble transmission and calculate a wrong timing estimate. In the random access (RA) response the wrongly detected preamble number will be included, so that in case that no terminal has performed random access (RA) with this wrongly detected RA preamble nothing will happen. Such failure manifests itself as a missed and false detection.

Because of the above properties a special mode - the restricted set of cyclic shifts - can be defined for LTE. Here not all cyclic shifts that can be actually derived from a single root sequence are allowed. Cyclic shifts that overlap with zones in which secondary peaks from already defined preambles may occur are forbidden. Furthermore, root sequences are also forbidden, which may create secondary peaks within the own cyclic shift zone. Since certain cyclic shifts and also root sequences are forbidden, the total number of sets with 64 preambles becomes smaller making cell planning more difficult for this mode. Another drawback of this mode is that the maximum supported cell size shrinks to approximately 33 km.

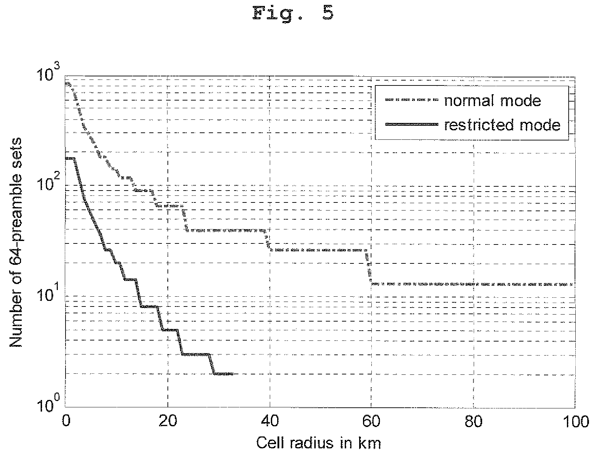

Figure 5 shows in the vertical Y axis the number of random access (RA) preamble sets with 64 entries over cell size, represented in the horizontal x axis. It can be seen that no set exists for cells larger than 33 km.

Cells with many terminals suffering from high frequency offsets must be operated with the restricted set of cyclic shifts. Drawbacks of this mode are reduced number of preambles and smaller maximum supported cell size. Therefore it is undesirable to operate a cell with the restricted set of cyclic shifts if not really necessary. Furthermore, once a cell has been configured for operating with the restricted set it is difficult and unpractical to reconfigure it to the non-restricted set, should the conditions suggest that an operation with the unrestricted set becomes more advantageous.

Having in mind the above properties valid for LTE networks, it can be readily recognised that the method described with reference to Figure 2 may be applies to LTE networks wherein the first set of RAID sequences may be a set of sequences derived by cyclic shifting from sequences having particular properties like Zadoff-Chu sequences, for instance as those typically employed and defined for LTE networks as explained above.

In the case of LTE networks, steps 100 and 110 of the method described with reference to Figure 2 may comprise performing a correlation on the received random access identification sequences. The steps 100 and 110 may further comprise determining a correlation pattern and determine therefrom whether frequency offset is present.

Reference will now be made to a further embodiment implementing the concept of the invention to an LTE network. As already mentioned with reference to Figure 4, a random access (RA) transmission suffering from a frequency offset of approximately 625 Hz creates a very typical pattern in the correlator output signal: Two peaks displaced by $d_u$ time units. According to the present embodiment of the invention, it is proposed to use this property to automatically detect the presence of terminals suffering from high frequency offsets and - if needed - automatically enable the restricted set of cyclic shifts. For instance, the frequency offset analysis step of Figure 1 (step 110) may comprise analysing the distance between peaks in order to establish whether the preambles, i.e. the RAID sequences, are affected by frequency offset.

As shown in Figure 4, the random access (RA) transmission suffering from a frequency offset of approximately 625 results in a correlator output signal with two peaks. One of these peaks is correct, the other one is the secondary peak displaced by $d_u$ time units. At a frequency offset of 625 Hz both peaks have approximately equal strength. For frequency offsets lower or higher than 625 Hz even multiple peaks are present.

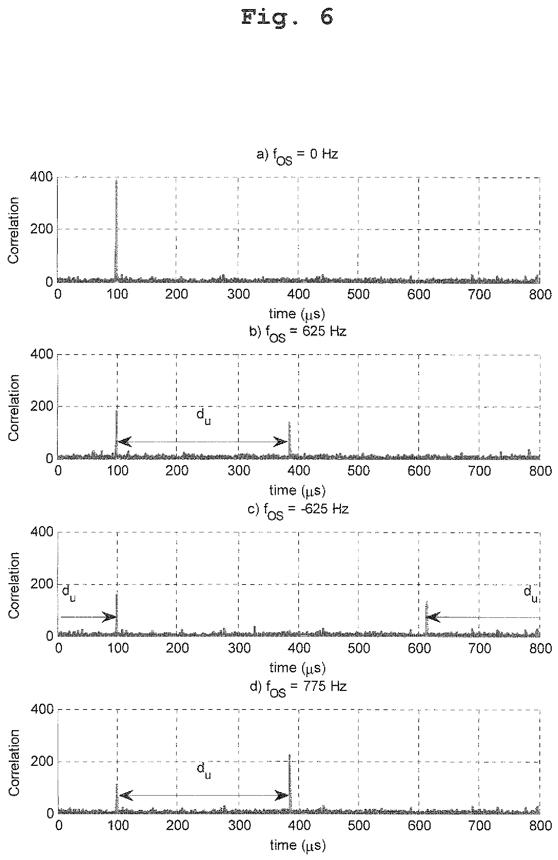

Figure 6 shows the correlator output signal for various frequency offsets. The different graphs report in the vertical Y axis the correlator output. The horizontal axis X reports the position of the sequence expressed as the time window (in $\mu$s in the referred Figure). Figure 6(a) depicts the situation wherein no frequency offset occurs. In presence of frequency offsets, however, and depending on the amount of frequency offset, the correlation pattern may comprise more than one peak, wherein the weight of the peaks changes. Figure 6(b) reports the pattern with two peaks for the case of a frequency offset equal to 625 Hz. The sign of the frequency offset determines if the secondary peak leads or trails the true peak, i.e. the sign determines if the cyclic delay is positive or negative. Such situation is illustrated in Figure 6(c) for a frequency offset of -625 Hz. As it can be seen for instance from Figure 6(d), showing the correlation output pattern for a frequency offset equal to 775 Hz, both peaks are present even if a terminal suffers from a frequency offset different than 625 Hz.

If the frequency offset becomes close to 1250 Hz the true peak disappears and only the secondary peak is left. This case is hardly distinguishable from a random access (RA) transmission with no frequency offset but an additional delay of $\pm d_u$ time units. However, these maximum frequency offsets occurs only at extreme high speeds and radially movements towards/away from the base station. As soon as the terminal does not move directly in radial direction the radial velocity component decreases and with it also the experienced frequency offset due to the Doppler effect.

It is therefore fair to assume that a cell containing many users with high frequency offsets will also contain many users with frequency offsets around 600 Hz. If these users perform a random access (RA) attempt, the obtained correlation signal contains the true peak and the secondary peak. Based on the presence of a second correlation peak (at the expected position) the presence of users with high frequency offset can be determined and the restricted set of cyclic shifts can be enabled. This is an example of the kind of analysis that can be performed during the sequence alteration analysis step of Figure 2 (step 110).

It is of course also possible that a second user is performing RA at the same time and thus the obtained correlation signal shows two peaks. However, it is considered unlikely that the obtained correlation profile will match the above described high frequency offset profile: in order to assemble the high frequency offset profile the second user must use the same root sequence (it is recalled that $d_u$ depends on the root sequence index u) and a preamble (cyclic shift) together with a location such that the following condition is fulfilled:

$$(-v_1 N_{CS} + T_1) - (-v_2 N_{CS} + T_2) = \pm d_u$$

wherein $T_i$ and $v_i$ are, respectively, the round trip delays and chosen cyclic shifts of the respective users. With a typically assumed RA load of 1 % it becomes very unlikely that the above equation is fulfilled.

The method of the invention, as already explained with reference to steps 120 and 130 in Figure 2, may be configured in an embodiment to switch operation from the unrestricted to the restricted set as soon as it is determined the presence of one sequence affected by frequency offset. Such a situation may however lead to a switch of operation also in presence of sporadic frequency offsets, as explained with reference to the above equation, thus resulting in a switch of operation in situations wherein a low level of misdetections could still be tolerated.

In another embodiment of the invention, in view of certain situations as expressed by the above condition and in order to reduce the likelihood of wrong conclusions, counters can be used to monitor how many sequences affected by frequency offset are determined. Only if expected high frequency offset profiles occur several times, the restricted set of cyclic shifts will be enabled. In other words, it is generally desirable to detect a degree or quantity of sequence alteration, and to only perform mode switching if this degree exceeds a predetermined threshold, e.g. to count the number of occurrences of a frequency offset pattern in the output of a correlator during a given time window, and to only switch if that number exceeds a predetermined limit. Such implementation is an example of implementation of the step 120 of Figure 2 for determining whether a mode switching condition has been detected.

On the other hand and according to another embodiment of the invention, if the restricted set of cyclic shifts is once enabled, the presence of secondary peaks can be monitored and if no or only very seldom secondary peaks occur, the normal set can be reactivated. Said embodiment can be evidently combined with the previous explained embodiments and represent a different implementation of step 120 of Figure 2. Again, this generally means detecting a degree of sequence alteration and switching to a normal mode if the degree falls below a predetermined limit.

This procedure is also applicable if the magnitude of the frequency offset is larger than 1250 Hz. Even though none of the main peaks is correct, the delay between the two main peaks is still $\pm d_u$.

Determination that RA transmissions suffering from high frequency offsets are present is more difficult if $d_u$ is very small. The secondary peak - which is displaced $d_u$ time units from the true peak - may be interpreted as another path of the wireless channel. To avoid this situation, an embodiment of the invention foresees excluding root sequences u leading to such small $d_u$ values in cells which may experience RA transmissions with high frequency offsets. Such implementation would lead to a different restricted set or a further set of preambles, i.e. RAID sequences, to be implemented by the method of the invention. In other words, this is an example of a third set RAID sequences to which operation can be switched.

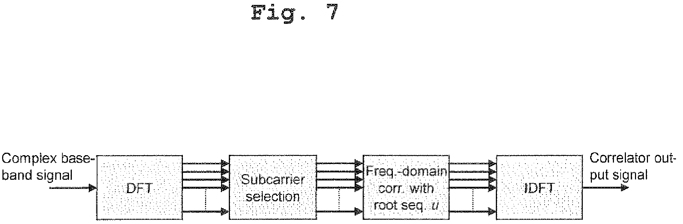

Figure 7 shows the block diagram of a frequency-domain RA receiver as an example of a detector for identifying received RAID sequences. As represented therein, the complex base band signal is input to a component performing DFT (Discrete Fourier Transform) operations. The result of the DFT is input to a second component performing subcarrier selection. The result of the subcarrier selection operation is then provided to the component operating the frequency domain correlation with root sequence u. Finally, the output of the frequency domain correlation is provided to an IDFT (Inverse Discrete Fourier Transform) block for producing the correlator output signal. Subsequent processing steps are then performed like combining multiple antenna signals, identification of the transmitted preamble, and calculation of timing alignment. These are not shown in the figure, as they are basically known. Even though the above described behaviour is more pronounced for a frequency-domain receiver, it is not limited to it.

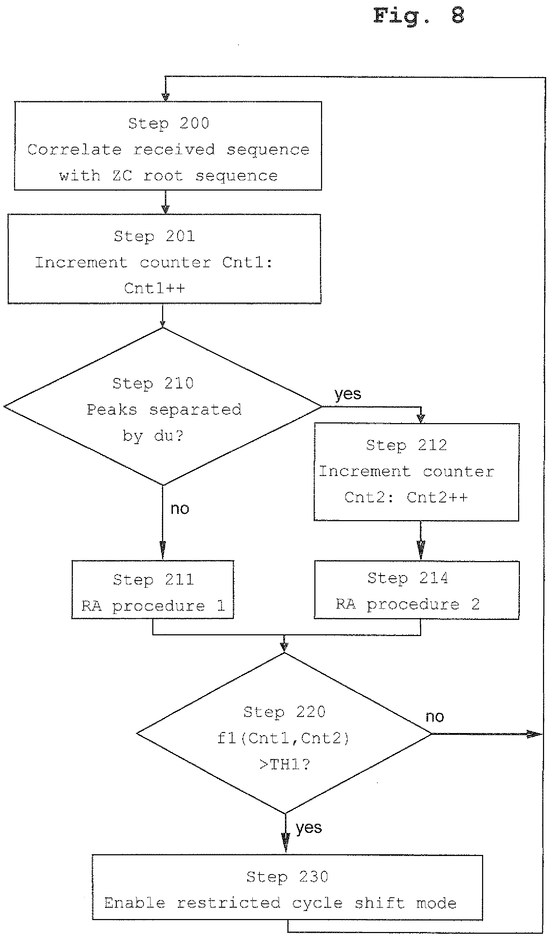

Figure 8 shows a flow diagram according to another embodiment of the proposed invention for the automatic activation of a restricted set of cyclic shifts. Said method can be considered as an example of the method depicted in Figure 2 and shares with that method the fundamental idea of dynamically managing the set of RAID sequences. In step 200 the received sequences comprised in random access messages are correlated with ZC root sequence u. A first counter Cnt1 is incremented, thus keeping a record of the number of received sequences (step 201).

At step 210 it is checked whether the correlator output signal comprises peaks separated by $d_u$. The question that needs to be answered at step 210 is whether there are peaks separated by $d_u$ in the correlator output. Such step is another example of implementing the frequency analysis step 110 of Figure 2. If the correlator output signal for root sequence u contains peaks displaced by $d_u \pm \Delta$ a second counter Cnt2 is increased (step 212).

It is noted that $\Delta$ is a small number taking a time dispersive fading channel into account, i.e. even though the cyclic delay is exactly $d_u$ the displacement may look slightly different. This parameter is optional and may be set to zero if desired.

In step 220 a test is performed checking the result of a first function dependent on the value of the two counters Cnt1 and Cnt2. In one implementation, if the counter Cnt2 exceeds the value of a first threshold TH1, then the method proceeds to step 230 otherwise the method starts again with step 200. In another implementation, the function reports the value of the counter Cnt2 normalized to the value of the counter Cnt1, i.e. the function reports the number of frequency offsets detected against the total number of sequences received. As it can be seen, the test of step 220 represent several possibilities for detecting a mode switching condition as described in step 120 of Figure 2. If the result of said function exceeds the threshold TH1, the method proceeds further to step 230 otherwise starts again with step 200. More elaborate cost functions may be easily envisioned, including for instance also a time window or a time unit in which the sequences are received. The threshold may also be absolute or relative (normalized to number of received RA attempts) and even more elaborated cost functions may be envisioned.

Step 230 is reached when the test in step 220 produces a positive result, for instance when the counter Cnt2 exceeds a certain threshold TH1 or when the result of a more elaborate function exceeds a threshold TH1. Under said circumstance, the restricted set of cyclic shifts is enabled (step 230). The execution of step 230 is an example of the step 130 depicted in Figure 2.

Figure 8 also shows steps 211 and 214 subsequent to step 210. These represent random access procedures to be performed in response to having received a random access request containing a RAID sequence examined in steps 200, 201 and 210. The two procedures may be the same, but preferably a different RA procedure is conducted depending on whether or not step 210 detected an indication of the presence of a frequency offset.

The method shown in Figure 8 achieves the automatic shift from the unrestricted set to the restricted set of operation of a cell when user equipments are affected by frequency offset. By varying the threshold TH1 and the function used in step 220, the automatic switch of operation of the cell can be configured and managed in a highly flexible and dynamic manner. For instance, the method can be configured to switch to the restricted set as soon as frequency offset is determined to be present in the cell (i.e. if a single instance of frequency offset is detected) or only when a determination is made that the degree of frequency offset exceeds a certain threshold. The cell can be configured such that a predetermined degree or rate of misidentification may still be tolerated, thus avoiding the switch to the unrestricted set when the degree of frequency offset is determined to be below a given limit.

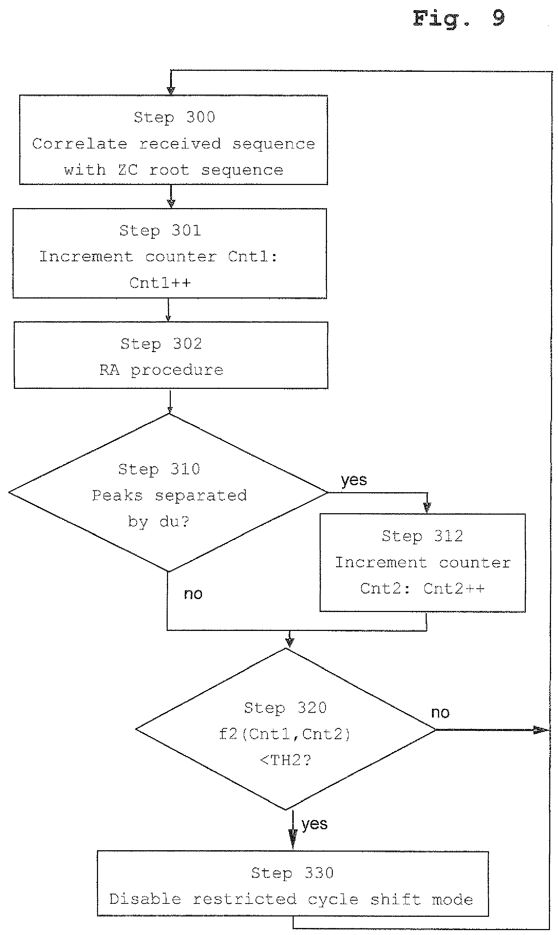

Once in restricted mode, the number of secondary peaks can be monitored further. If its frequency (in the sense of recurrence over a given time window or over the total number of RA attempts) drops below a certain limit the normal set may be reactivated. This procedure is shown in Figure 9, which represents another example of the more general method depicted in Figure 2.

Steps 300 and 301 perform the same operations as steps 200 and 201 of Figure 8, respectively, and their explanation is therefore here not repeated. Step 302 is a random access procedure to be conducted in response to having received an RA request comprising the RAID sequence under analysis.

At step 310 an analysis is performed on the correlator output to determine whether the received RAID sequence is affected by frequency offset. For instance, it is determined whether peaks of the correlator output pattern are separated by $d_u$. If said condition is not met, then the result of the analysis is "no" and the method proceeds to step 320. If on the contrary said condition is met, then the result of the analysis is "yes" and the method proceeds to step 312. The analysis of step 310 represent another embodiment of the frequency offset analysis of the present invention, as also described by step 110 of Figure 2.

At step 312 a second counter Cnt2 is incremented, thus keeping a record of the sequences which have been determined as being affected by frequency offset. The method then proceeds to step 320.

In step 320 a test is performed checking the result of a second function dependent on the value of the two counters Cnt1 and Cnt2. In one implementation, the second function consists in calculating the rate of sequences affected by frequency offset over a given time window or over the total number of sequences directed. The second function can however be any other more elaborate function working on absolute or relative values and returning absolute or relative values. The test of step 320 may consist in checking whether the result of the second function is below a second threshold TH2. The second threshold TH2 can be coincident with TH1, for ease of implementation, or different from the threshold TH1 when too frequent switching needs to be avoided, i.e. then switching hysteresis is introduced. The test of step 320 represents a further embodiment for implementing the detection of a mode switching condition.

When the result of the test of step 320 is "no" the method starts again with step 300, otherwise it proceeds to step 330. At step 330 the operation of the cell is switched back to the unrestricted set, i.e. the restricted set is disabled and the unrestricted set is enabled.

The method shown in Figure 9 achieves the automatic shift from the restricted set to the unrestricted set of operation of a cell when user equipments are not anymore or not so frequently affected by frequency offset. By varying the threshold TH2 and the second function used in step 320, the automatic switch of operation of the cell can be configured and managed in a highly flexible and dynamic manner, in a similar manner as already explained with reference to step 220 of Figure 8.

It is noted that the two methods of Figures 8 and 9 can be performed in combination in order to achieve a fully automatic method of operation of the cell, which operation is switched dynamically between the two sets of sequences according to the occurrence of frequency offset. The threshold and functions can be adjusted and chosen in order to achieve a desired level of flexibility and efficiency of operation.

For example, upon completion of step 230 of Figure 8 the method may jump to step 300 of Figure 9 and, upon completion of step 330 of Figure 9 the method may jump to step 200 of Figure 8. In such a way, the two methods do not need to run at the same time thus saving processing power and resources. On the other hand, the two methods my also be conducted concurrently.

The present invention has been described with respect to detailed embodiments. These are illustrative serve to provide a better understanding, but are nor to be seen as limiting. Rather, the scope of protection is defined by the appended claims and their equivalents.

## Claims

1. A method for a network entity (20) for controlling a random access mode in a cell (10) of a cellular communication system, said cell (10) being operable in a first random access mode associated with a first set of random access identification sequences or in a second random access mode associated with a second set of random access identification sequences, said random access identification sequences to be used by terminals (UE-1 ... UE-n) performing a random access operation in said cell (10), where said second set of random access identification sequences comprises sequences that do not result in other sequences of the same set when they undergo alteration and wherein the first set of random access identification sequence is a set of sequences derived by cyclic shifting a Zadoff-Chu sequence and the second set of random access identification sequences comprises a number of sequences that is smaller than the number of sequences of the first set, the method **characterized by**:

   performing a sequence alteration analysis (Step 110) based on an output of a random access identification sequence detector in a network entity (20), and
   if a mode switching condition is determined (Step 120) on the basis of the sequence alteration analysis, automatically switching operation (Step 130) of said cell (10) from one of said random access modes to the other of said random access modes.

2. The method according claim 1, wherein said sequence alteration analysis comprises counting a number of occurrences of sequence alteration events in the output of the random access identification sequence detector.

3. The method according to claim 1 or 2, wherein
   the sequence alteration analysis comprises reporting presence of random access identification sequences affected by sequence alteration in said cell (10), a first mode switching condition is determined on the basis of the reported presence, and
the automatic switching operation comprises automatically switching operation from the first random access mode to the second random access mode upon determination of said first mode switching condition.

4. The method of claim 3, wherein said presence is reported if one or both of

  - a measured frequency of sequence alteration events exceeds a predetermined first threshold, and
  - a normalized number of affected received sequences exceeds a predetermined first percentage.

5. The method according to any one of the preceding claims, wherein
the sequence alteration analysis comprises reporting absence of random access identification sequences affected by sequence alteration in said cell (10),
a second mode switching condition is determined on the basis of the reported absence, and
the automatic switching operation comprises automatically switching operation from the second random access mode to the first random access mode upon determination of said second mode switching condition.

6. The method of claim 5, wherein said absence is reported if one or both of

  - a measured frequency of sequence alteration events falls below a predetermined second threshold, and
  - a normalized number of affected received sequences falls below a predetermined second percentage.

7. The method according to any of the preceding claims, wherein the random access identification sequence detector compares received random access identification sequences with predetermined random access identification sequences for outputting a detection result.

8. The method of claim 7, wherein the random access identification sequence detector comprises a correlator for correlating received random access identification sequences with predetermined random access identification sequences.

9. The method according to claim 7 or 8, wherein said sequence alteration analysis comprises analysing whether a pattern characteristic of sequence alteration is present in said detection result.

10. The method of claims 8 and 9, wherein the characteristic pattern comprises correlation peaks indicating presence of sequence alteration.

11. The method according to any of the preceding claims, wherein the random access identification sequences are comprised in a preamble of a random access message according to the standard 3GPP TS 36.211 ver. 8.0.0.

12. The method according to any of the preceding claims, wherein the random access identification sequences comprise constant amplitude zero auto correlation sequences.

13. The method of one of claims 1 to 12, wherein said sequence alterations comprise frequency offsets.

14. The method of one of claims 1 to 13, wherein the network entity (20) is a network node.

15. A computer program product comprising computer code parts arranged for performing the steps of a method according to one of claims 1 to 12 when loaded and executed on a programmable network entity.

16. A network entity (20) for communicating with terminals (UE-1 ... UE-n) in a cell (10) of a cellular communication system, said cell (10) adapted for operating in a first random access mode associated with a first set of random access identification sequences or in a second random access mode associated with a second set of random access identification sequences, said random access identification sequences to be used by terminals (UE-1 ... UE-n) performing a random access operation in said cell (10), where said second set of random access identification sequences comprises sequences that do not result in other sequences of the same set when they undergo alteration and wherein the first set of random access identification sequence is a set of sequences derived by cyclic shifting a Zadoff-Chu sequence and the second set of random access identification sequences comprises a number of sequences that is smaller than the number of sequences of the first set, the network entity (20) **characterized by** comprising

a random access identification sequence detector,
an analyser for performing a sequence alteration analysis based on an output of the random access identification sequence detector, and
a mode switch adapted to automatically switch operation of said cell (10) from one of said random access modes to the other of said random access modes if a mode switching condition is determined on the basis of the sequence alteration analysis.

17. A method in a cellular communication system for controlling a random access mode in a cell (10) of a cellular communication system, said cell (10) being operable in a first random access mode associated with a first set of random access identification sequences or in a second random access mode associated with a second set of random access identification sequences, said random access identification sequences to be used by terminals (UE-1 ... UE-n) performing a random access operation in said cell (10), where said second set of random access identification sequences comprises sequences that do not result in other sequences of the same set when they undergo alteration and wherein the first set of random access identification sequence is a set of sequences derived by cyclic shifting a Zadoff-Chu sequence and the second set of random access identification sequences comprises a number of sequences that is smaller than the number of sequences of the first set, the cellular communication system **characterized by** comprising a first network entity and a second network entity, the method comprising:

in the first network entity, performing a sequence alteration analysis based on an output of a random access identification sequence detector in the first network entity, and
in the second network entity, if a mode switching condition is determined on the basis of the sequence alteration analysis, automatically switching operation of said cell (10) from, one of said random access modes to the other of said random access modes.

## Patentansprüche

1. Verfahren für eine Netzwerkvorrichtung (20) zum Steuern eines Direktzugriffsmodus in einer Zelle (10) eines zellulären Kommunikationssystems, wobei die Zelle (10) betreibbar ist in einem ersten Direktzugriffsmodus, der assoziiert ist mit einem ersten Satz von Direktzugriffs-Identifikationssequenzen, oder in einem zweiten Direktzugriffsmodus, der assoziiert ist mit einem zweiten Satz von Direktzugriffs-Identifikationssequenzen, wobei die Direktzugriffs-Identifikationssequenzen verwendet werden durch Endgeräte (UE-1 ... UE-n), die einen Direktzugriffsbetrieb in der Zelle (10) durchführen, wobei der zweite Satz von Direktzugriffs-Identifikationssequenzen Sequenzen umfasst, die nicht zu anderen Sequenzen des gleichen Satzes führen, wenn diese einer Änderung unterliegen, und wobei der erste Satz von Direktzugriffs-Identifikationssequenzen ein Satz von Sequenzen ist, der abgeleitet wird durch ein zyklisches Verschieben einer Zadoff-Chu-Sequenz und der zweite Satz von Direktzugriffs-Identifikationssequenzen eine Anzahl von Sequenzen umfasst, die kleiner ist als die Anzahl von Sequenzen des ersten Satzes, wobei das Verfahren **gekennzeichnet ist durch**:

Durchführen einer Sequenzänderungsanalyse (Schritt 110) auf Grundlage einer Ausgabe eines Direktzugriffs-Identifikationssequenzdetektors in einer Netzwerkvorrichtung (20), und
wenn eine Modenwechselbedingung bestimmt wird (Schritt 120) auf Grundlage der Sequenzänderungsanalyse, einen automatischer Wechselbetrieb (Schritt 130) der Zelle (10) von einem der Direktzugriffsmodi zu einem anderen der Direktzugriffsmodi.

2. Verfahren nach Anspruch 1, wobei die
Sequenzänderungsanalyse ein Zählen einer Anzahl eines. Auftretens von Sequenzänderungsereignissen in der Ausgabe des Direktzugriffs-Identifikationssequenzdetektors umfasst.

3. Verfahren nach Anspruch 1 oder 2, wobei
die Sequenzänderungsanalyse ein Melden eines Vorhandenseins von Direktzugriffs-Identifikationssequenzen umfasst, die durch eine Sequenzänderung der Zelle (10) betroffen sind, wobei eine erste Modenwechselbedingung auf Grundlage des gemeldeten Vorhandenseins bestimmt wird, und
der automatische Wechselbetrieb einen automatischen Wechselbetrieb von dem ersten Direktzugriffsmodus zu dem zweiten Direktzugriffsmodus bei Bestimmung der ersten Modenwechselbedingung umfasst.

4. Verfahren nach Anspruch 3, wobei das Vorhandensein gemeldet wird, wenn eines oder beides gilt von

- eine gemessene Frequenz von Sequenzänderungsereignissen übersteigt einen vorbestimmten Schwellenwert, und
- eine normalisierte Anzahl betroffener empfangener Sequenzen übersteigt einen vorbestimmten ersten Prozentanteil.

5. Verfahren nach einem der vorhergehenden Ansprüche, wobei die Sequenzänderungsanalyse ein Melden eines Fehlens von Direktzugriffs-Identifikationssequenzen umfasst, die durch eine Sequenzänderung in der Zelle (10) betroffen sind,
eine zweite Modenwechselbedingung auf Grundlage des gemeldeten Fehlens bestimmt wird, und
der automatische Wechselbetrieb einen automatischen Wechselbetrieb von dem zweiten Direktzugriffsmodus zu dem ersten Direktzugriffsmodus bei Bestimmung der zweiten Modenwechselbedingung umfasst.

6. Verfahren nach Anspruch 5, wobei das Fehlen gemeldet wird, wenn eines oder beides gilt von

- eine gemessene Frequenz von Sequenzänderungsereignissen fällt unterhalb einen vorbestimmten zweiten Schwellenwert, und
- eine normalisierte Anzahl betroffener empfangener Sequenzen fällt unterhalb eines vorbestimmten zweiten Prozentanteils.

7. Verfahren nach einem der vorhergehenden Ansprüche, wobei der Direktzugriffs-Identifikationssequenzdetektor empfangene Direktzugriffs-Identifikationssequenzen mit vorbestimmten Direktzugriffs-Identifikationssequenzen zum Ausgeben eines Detektionsresultats vergleicht.

8. Verfahren nach Anspruch 7, wobei der Direktzugriffs-Identifikationssequenzdetektor ein Korrelationsmittel umfasst zum Korrelieren empfangener Direktzugriffs-Identifikationssequenzen mit vorbestimmten Direktzugriffs-Identifikationssequenzen.

9. Verfahren nach Anspruch 7 oder 8, wobei die Sequenzänderungsanalyse ein Analysieren umfasst, ob eine Mustercharakteristik einer Sequenzänderung in dem Detektionsresultat vorhanden ist.

10. Verfahren nach Anspruch 8 und 9, wobei die Mustercharakteristik Korrelationsspitzen umfasst, die ein Vorhandensein einer Sequenzänderung anzeigen.

11. Verfahren nach einem der vorhergehenden Ansprüche, wobei die Direktzugriffs-Identifikationssequenzen eine Präambel einer Direktzugriffsnachricht gemäß dem Standard 3GPP TS 36.211 Ver. 8.0.0 umfasst sind.

12. Verfahren nach einem der vorhergehenden Ansprüche, wobei die Direktzugriffs-Identifikationssequenzen Konstant-Amplituden-Null-Auto-Korrelations-Sequenzen umfassen.

13. Verfahren nach einem der Ansprüche 1 bis 12, wobei die Sequenzänderungen Frequenz-Offsets umfassen.

14. Verfahren nach einem der Ansprüche 1 bis 13, wobei die Netzwerkvorrichtung (20) ein Netzwerkknoten ist.

15. Computerprogrammprodukt mit Computer-Code-Elementen, die ausgebildet sind zum Durchführen der Schritte eines Verfahrens gemäß einem der Ansprüche 1 bis 12 bei Laden und Ausführen an einer programmierbaren Netzwerkvorrichtung.

16. Netzwerkvorrichtung (20) zum Kommunizieren mit Endgeräten (UE-1 ... UE-n) in einer Zelle (10) eines zellulären Kommunikationssystems, wobei die Zelle (10) ausgebildet ist zum Betreiben in einem ersten Direktzugriffsmodus, der assoziiert ist mit einem ersten Satz von Direktzugriffs-Identifikationssequenzen, oder in einem zweiten Direktzugriffsmodus, der assoziiert ist mit einem zweiten Satz von Direktzugriffs-Identifikationssequenzen, wobei die Direktzugriffs-Identifikationssequenzen durch Endgeräte (UE-1...UE-n) verwendet werden, die einen Direktzugriffsbetrieb in der Zelle (10) durchführen, wobei der zweite Satz von Direktzugriffs-Identifikationssequenzen Sequenzen umfasst, die nicht zu anderen Sequenzen des gleichen Satzes führen, wenn diese einer Änderung unterliegen, und wobei der erste Satz von Direktzugriffs-Identifikationssequenzen ein Satz von Sequenzen ist, der durch ein zyklisches Verschieben einer Zadoff-Chu-Sequenz abgeleitet werden, und der zweite Satz von Direktzugriffs-Identifikationssequenzen eine Anzahl von Sequenzen umfasst, die geringer ist als die Anzahl von Sequenzen des ersten Satzes, wobei die Netzwerkvorrichtung (20) **gekennzeichnet ist durch** einen Direktzugriffs-Identifikationssequenzdetektor, ein Analysemittel zum Durchführen einer Sequenzänderungsanalyse auf Grundlage einer Ausgabe des Direktzugriffs-Identifikationssequenzdetektors, und ein Modenwechselmittel, ausgebildet zum automatischen Wechseln eines Betriebs der Zelle (10) von einem der Direktzugriffsmodi zu dem anderen der Direktzugriffsmodi, wenn eine Modenwechselbedingung auf Grundlage der Sequenzänderungsanalyse bestimmt wird.

17. Verfahren in einem zellulären Kommunikationssystem zum Steuern eines Direktzugriffsmodus in einer Zelle (10) eines zellulären Kommunikationssystems, wobei die Zelle (10) betreibbar ist in einem ersten Direktzugriffsmodus, der assoziiert ist mit einem ersten Satz von Direktzugriffs-Identifikationssequenzen, oder in einem zweiten Direktzugriffsmodus, der assoziiert ist mit einem zweiten Satz von Direktzugriffs-Identifikationssequenzen, wobei die Direktzugriffs-Identifikationssequenzen verwendet werden durch Endgeräte (UE-1 ... UE-n), die einen Direktzugriffsbetrieb in einer Zelle (10) durchführen, wobei der zweite Satz von Direktzugriffs-Identifikationssequenzen Sequenzen umfasst, die nicht zu anderen Sequenzen des gleichen Satzes führen, wenn diese einer Änderung unterliegen, und wobei der erste Satz von Direktzugriffs-Identifikationssequenzen ein Satz von Sequenzen ist, der durch ein zyklisches Verschieben einer Zadoff-Chu-Sequenz abgeleitet werden, und der zweite Satz von Direktzugriffs-Identifikationssequenzen eine Anzahl von Sequenzen umfasst, die geringer ist als die Anzahl von Sequenzen des ersten Satzes, wobei das zelluläre Kommunikationssystem **gekennzeichnet ist durch** eine erste Netzwerkvorrichtung und eine zweite Netzwerkvorrichtung, wobei das Verfahren umfasst:

in der ersten Netzwerkvorrichtung, Durchführen einer Sequenzänderungsanalyse auf Grundlage einer Ausgabe eines Direktzugriffs-Identifikationssequenzdetektors in der ersten Netzwerkvorrichtung, und
in der zweiten Netzwerkvorrichtung, wenn eine Modenwechselbedingung auf Grundlage der Sequenzänderungsanalyse bestimmt wird, einen automatischen Wechselbetrieb der Zelle (10) von einem der Direktzugriffsmodi zu dem anderen der Direktzugriffsmodi.

## Revendications

1. Procédé utilisé par une entité de réseau (20) pour commander un mode d'accès aléatoire dans une cellule (10) d'un système de communication cellulaire, ladite cellule (10) pouvant fonctionner dans un premier mode d'accès aléatoire associé à un premier ensemble de séquences d'identification pour accès aléatoire ou dans un second mode d'accès aléatoire associé à un second ensemble de séquences d'identification pour accès aléatoire, lesdites séquences d'identification pour accès aléatoire devant être utilisées par des terminaux (UE-1 à UE-n) effectuant une opération d'accès aléatoire dans ladite cellule (10), ledit second ensemble de séquences d'identification pour accès aléatoire comprenant des séquences qui ne produisent pas d'autres séquences du même ensemble lorsqu'elles subissent une altération, ledit premier ensemble de séquences d'identification pour accès aléatoire étant un ensemble de séquences dérivées par décalage cyclique d'une séquence de Zadoff-Chu et le second ensemble de séquences d'identification pour accès aléatoire comprenant un nombre de séquences qui est plus petit que le nombre de séquences du premier ensemble, le procédé étant **caractérisé par** les étapes consistant à :

effectuer une analyse d'altération de séquences (étape 110) en fonction d'une sortie d'un détecteur de séquences d'identification pour accès aléatoire dans une entité de réseau (20) ; et
si une situation de commutation de mode est déterminée (étape 120) en fonction de l'analyse d'altération de séquences, opérer une commutation automatique (étape 130) de ladite cellule (10) entre l'un desdits modes d'accès aléatoire et l'autre desdits modes d'accès aléatoire.

2. Procédé selon la revendication 1, dans lequel ladite étape d'analyse d'altération de séquences comprend une étape consistant à compter un nombre d'occurrences d'événements d'altération de séquences dans la sortie du détecteur de séquences d'identification pour accès aléatoire.

3. Procédé selon la revendication 1 ou 2, dans lequel :

l'étape d'analyse d'altération de séquences comprend une étape consistant à rapporter la présence de séquences d'identification pour accès aléatoire affectées par l'altération des séquences dans ladite cellule (10), une première situation de commutation de mode étant déterminée en fonction de la présence rapportée ; et
l'opération de commutation automatique consiste en une opération de commutation automatique entre le premier mode d'accès aléatoire et le second mode d'accès aléatoire après identification de ladite première situation de commutation de mode.

**4.** Procédé selon la revendication 3, dans lequel ladite présence est rapportée si une des ou les deux conditions suivantes sont réunies :

- une fréquence mesurée des événements d'altération de séquences dépasse un premier seuil prédéterminé ; et
- un nombre normalisé de séquences reçues qui sont affectées dépasse un premier pourcentage prédéterminé.

**5.** Procédé selon l'une quelconque des revendications précédentes, dans lequel :

l'étape d'analyse de l'altération des séquences comprend l'étape consistant à rapporter l'absence de séquences d'identification pour accès aléatoire affectées par l'altération des séquences dans ladite cellule (10) ;
une seconde situation de commutation de mode est déterminée en fonction de l'absence rapportée ; et
l'opération de commutation automatique consiste en une opération de commutation automatique entre le second mode d'accès aléatoire et le premier mode d'accès aléatoire après identification de ladite seconde situation de commutation de mode.

**6.** Procédé selon la revendication 5, dans lequel ladite absence est rapportée si une des ou les deux conditions suivantes sont réunies :

- une fréquence mesurée des événements d'altération de séquences chute au-dessous d'un second seuil prédéterminé ; et
- un nombre normalisé de séquences reçues qui sont affectées chute au-dessous d'un second pourcentage prédéterminé.

**7.** Procédé selon l'une quelconque des revendications précédentes, dans lequel le détecteur de séquences d'identification pour accès aléatoire compare les séquences d'identification pour accès aléatoire qui ont été reçues avec des séquences d'identification pour accès aléatoire prédéterminées afin de produire un résultat de détection.

**8.** Procédé selon la revendication 7, dans lequel le détecteur de séquences d'identification pour accès aléatoire comprend un corrélateur destiné à corréler les séquences d'identification pour accès aléatoire reçues avec des séquences d'identification pour accès aléatoire prédéterminées.

**9.** Procédé selon la revendication 7 ou 8, dans lequel ladite étape d'analyse de l'altération des séquences comprend l'étape consistant à analyser si un motif caractéristique d'altération de séquences est présent dans ledit résultat de détection.

**10.** Procédé selon les revendications 8 et 9, dans lequel le motif caractéristique comprend des pics de corrélation indiquant la présence d'altérations des séquences.

**11.** Procédé selon l'une quelconque des revendications précédentes, dans lequel les séquences d'identification pour accès aléatoire sont comprises dans un préambule d'un message d'accès aléatoire selon la norme 3GPP TS 36.211 ver. 8.0.0.

**12.** Procédé selon l'une quelconque des revendications précédentes, dans lequel les séquences d'identification pour accès aléatoire consistent en des séquences d'amplitude constante à autocorrélation nulle.

**13.** Procédé selon l'une des revendications 1 à 12, dans lequel lesdites altérations des séquences consistent en décalages de fréquence.

**14.** Procédé selon l'une des revendications 1 à 13, dans lequel l'entité de réseau (20) est un noeud de réseau.

**15.** Produit-programme informatique comprenant des parties de code informatique conçues pour exécuter les étapes d'un procédé selon l'une des revendications 1 à 12 lorsqu'elles sont chargées et exécutées sur une entité de réseau programmable.

**16.** Entité de réseau (20) destinée à communiquer avec des terminaux (UE-1 à UE-n) dans une cellule (10) d'un système de communication cellulaire, ladite cellule (10) étant conçue pour fonctionner dans un premier mode d'accès aléatoire associé à un premier ensemble de séquences d'identification pour accès aléatoire ou dans un second mode d'accès aléatoire associé à un second ensemble de séquences d'identification pour accès aléatoire, lesdites séquences d'identification pour accès aléatoire devant être utilisées par des terminaux (UE-1 à UE-n) effectuant une opération d'accès aléatoire dans ladite cellule (10), ledit second ensemble de séquences d'identification pour accès aléatoire comprenant des séquences qui ne produisent pas d'autres séquences du même ensemble lorsqu'elles subissent une altération, ledit premier ensemble de séquences d'identification pour accès aléatoire étant un ensemble de séquences dérivées par décalage cyclique d'une séquence de Zadoff-Chu et le second ensemble de séquences d'identification pour accès aléatoire comprenant un nombre de séquences qui est plus petit que le nombre de séquences du premier ensemble, l'entité de réseau (20) étant **caractérisée en ce qu'**elle comprend :

un détecteur de séquences d'identification pour accès aléatoire ;
un analyseur destiné à effectuer une analyse d'altération des séquences en se fondant sur la sortie du détecteur de séquences d'identification pour accès aléatoire ; et
un commutateur de mode conçu pour commuter automatiquement le fonctionnement de ladite cellule (10) entre l'un desdits modes d'accès aléatoire et l'autre desdits modes d'accès aléatoire si une situation de commutation de mode est déterminée en fonction de l'analyse d'altération des séquences.

17. Procédé utilisé dans un système de communication cellulaire pour commander un mode d'accès aléatoire dans une cellule (10) d'un système de communication cellulaire, ladite cellule (10) pouvant fonctionner dans un premier mode d'accès aléatoire associé à un premier ensemble de séquences d'identification pour accès aléatoire ou dans un second mode d'accès aléatoire associé à un second ensemble de séquences d'identification pour accès aléatoire, lesdites séquences d'identification pour accès aléatoire devant être utilisées par des terminaux (UE-1 à UE-n) effectuant une opération d'accès aléatoire dans ladite cellule (10), ledit second ensemble de séquences d'identification pour accès aléatoire comprenant des séquences qui ne produisent pas d'autres séquences du même ensemble lorsqu'elles subissent une altération, ledit premier ensemble de séquences d'identification pour accès aléatoire étant un ensemble de séquences dérivées par décalage cyclique d'une séquence de Zadoff-Chu et le second ensemble de séquences d'identification pour accès aléatoire comprenant un nombre de séquences qui est plus petit que le nombre de séquences du premier ensemble, le système de communication cellulaire étant **caractérisé en ce qu'**il comprend une première entité de réseau et une seconde entité de réseau, le procédé comprenant les étapes consistant à :

sur la première entité de réseau, effectuer une analyse d'altération des séquences en fonction d'une sortie d'un détecteur de séquences d'identification pour accès aléatoire sur la première entité de réseau ; et
sur la seconde entité de réseau, si une situation de commutation de mode a été déterminée en fonction de l'analyse d'altération des séquences, commuter automatiquement le fonctionnement de ladite cellule (10) entre l'un desdits modes d'accès aléatoire et l'autre desdits modes d'accès aléatoire.

## Fig. 1

## Fig. 2

```
┌─────────────────────────────────────────┐
│                                          │
│            Step 100                      │
│        Detecting sequences               │
│                                          │
└─────────────────────────────────────────┘
                    │
                    ▼
┌─────────────────────────────────────────┐
│                                          │
│            Step 110                      │
│      Sequence alteration analysis        │
│                                          │
└─────────────────────────────────────────┘
                    │
                    ▼
              ◇ Step 120                      No
              Mode switching
           condition detected?
                    │
                   Yes
                    │
                    ▼
┌─────────────────────────────────────────┐
│                                          │
│            Step 130                      │
│     Automatically switch operation       │
│                                          │
└─────────────────────────────────────────┘
```

Fig. 3

Detector 910

Analyzer 920

Mode Switch 930

900

Cell

10

# Fig. 4

a) $f_{OS}$ = 0 Hz

b) $f_{OS}$ = 1250 Hz

c) $f_{OS}$ = 625 Hz

Fig. 5

# Fig. 6

Fig. 7

Complex base-
band signal → DFT → Subcarrier selection → Freq.-domain corr. with root seq. $u$ → IDFT → Correlator output signal

# Fig. 8

**Step 200**
Correlate received sequence with ZC root sequence

**Step 201**
Increment counter Cnt1:
Cnt1++

**Step 210**
Peaks separated by du?

yes

**Step 212**
Increment counter
Cnt2: Cnt2++

no

**Step 211**
RA procedure 1

**Step 214**
RA procedure 2

**Step 220**
f1(Cnt1,Cnt2)
>TH1?

no

yes

**Step 230**
Enable restricted cycle shift mode

Fig. 9

Step 300
Correlate received sequence
with ZC root sequence

Step 301
Increment counter Cnt1:
Cnt1++

Step 302
RA procedure

Step 310
Peaks separated
by du?

yes

Step 312
Increment counter
Cnt2: Cnt2++

no

Step 320
f2(Cnt1,Cnt2)
<TH2?

no

yes

Step 330
Disable restricted cycle shift mode

**EP 2 292 067 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008051033 A